# EUROPÄISCHE PATENTSCHRIFT

(11) **EP 0 976 601 B1**
(45) Veröffentlichungstag und Bekanntmachung des Hinweises auf die Patenterteilung: **22.10.2003**
(21) Anmeldenummer: 99114128.4
(22) Anmeldetag: 19.07.1999
(51) Int. Cl.: B60K 15/077, B60K 15/06

(54) **Kraftstofftank mit Füllstands-Messeinrichtung**
Fuel tank with level measurement device
Réservoir de carburant avec dispositif de mesure de niveau

(30) Priorität: 27.07.1998 DE 19833697
(43) Veröffentlichungstag der Anmeldung: 02.02.2000
(73) Patentinhaber: Kautex Textron GmbH & Co. KG., 53229 Bonn (DE)
(72) Erfinder: Hahner, Rainer, 53229 Bonn (DE); Walter, Rüdiger, 53123 Bonn (DE); Wagner, Axel, 53225 Bonn-Beuel (DE); Puempel, Andreas G.R., Essex, Ontario, N8M 3B8 (CA); Savoni, Lou, La Salle, Ontario N9J 3B3 (CA); Siekmann, Jim, Arnold, MO. 63010 (US)
(74) Vertreter: Koepsell, Helmut, Dipl.-Ing.

(56) Entgegenhaltungen:
- DE-A- 19 501 352
- PATENT ABSTRACTS OF JAPAN vol. 009, no. 003 (M-349), 9. Januar 1985 (1985-01-09) & JP 59 153622 A (NISSAN JIDOSHA KK), 1. September 1984 (1984-09-01)
- PATENT ABSTRACTS OF JAPAN vol. 010, no. 301 (M-525), 14. Oktober 1986 (1986-10-14) & JP 61 113519 A (NISSAN MOTOR CO LTD), 31. Mai 1986 (1986-05-31)

## Beschreibung

Die Erfindung betrifft einen Kraftstofftank für ein Kraftfahrzeug gemäß dem Oberbegriff des Anspruches 1. Ein solches Kraftstofftank ist bekannt aus DE-A-19501352.

Die innerhalb des Kraftstofftanks angeordnete Fördereinheit ist mit einer elektrischen Kraftstoffpumpe versehen, durch die der Motor des Kraftfahrzeugs mit Kraftstoff versorgt wird. Dabei hat das Reservoir, dessen Volumen wesentlich kleiner ist als das des Gesamt-Kraftstofftankes, insbesondere die Funktion sicherzustellen, daß auch bei ungünstigen Betriebszuständen, also beispielsweise bei langer Kurvenfahrt oder bei einer nicht horizontalen Position des Fahrzeugs, immer eine ausreichende Kraftstoffmenge sich im Bereich des Einlaufs der Pumpe befindet. Dies setzt das Vorhandensein einer gewissen Mindestmenge an Kraftstoff im Reservoir und somit ein entsprechendes Mindestvolumen desselben voraus.

In vielen Fällen werden Tanks aus thermoplastischem Kunststoff verwendet, die vorzugsweise im Extrusionsblasformen einstückig hergestellt werden. Dabei wird häufig die Fördereinheit mit dem Reservoir nach dem Herstellen des Tanks durch eine zumeist nachträglich in der Tankwandung angebrachte Öffnung in den Tank eingesetzt. Da es aus Gründen der Stabilität und der Dichtigkeit der nach dem Einbau der Fördereinheit im Tank zu verschließenden Öffnung erwünscht ist, letztere so klein wie möglich zu halten, besteht bei bekannten derartigen Tanks der Nachteil, daß das Reservoir der durch diese Öffnung in den Tank eingeführten Fördereinheit ein entsprechend kleines Volumen aufweist, welches beispielsweise in der Größenordnung von 0,5 bis 1 Liter liegt. Dieses Volumen ist in vielen Fällen in Anbetracht der Dauer der vorerwähnten in der Praxis vorkommenden ungünstigen Betriebszustände, während welcher nur wenig oder kein Kraftstoff aus dem das Reservoir umgebenden Volumen in das Reservoir fließt, zu gering.

Dieses aus den vorbeschriebenen Gründen ohnehin geringe Volumen des Reservoirs erfährt unter Umständen noch eine Verringerung durch eine außen an der Fördereinheit angebrachte Füllstands-Meßeinrichtng für den das Reservoir umgebenden Tank-Hauptraum, die gemeinsam mit der Fördereinrichtung durch die Öffnung in den Tank eingeführt werden muß. Da der Querschnitt der Öffnung die Kontur der Fördereinheit bestimmt und die Meßeinrichtung nicht wesentlich über diese Kontur nach außen vorstehen darf, ergibt sich die Notwendigkeit, die Meßeinrichtung innerhalb der Kontur, d. h., des Querschnittes der Fördereinheit unterzubringen. Dies hat die zwangsläufige Folge, daß das Volumen des Reservoirs eine entsprechende Verringerung erfährt. Somit liegt das Volumen des Reservoirs noch unter der Größe, die durch den Querschnitt der Öffnung in der Tankwandung ohnehin vorgegeben ist.

Der Erfindung liegt die Aufgabe zugrunde, einen Kraftstofftank der einleitend beschriebenen Art so auszugestalten, daß das Vorhandensein einer Füllstands-Meßeinrichtung nicht zwangsläufig zu einer Verringerung des Volumens des Reservoirs führt. Ferner soll es möglich sein, die Füllstands-Meßeinrichtung so anzuordnen, daß sie auch die Verwendung eines Reservoirs ermöglicht, dessen Querschnitt senkrecht zur Längsachse der Öffnung in der Tankwandung innerhalb des Tankes vergrößerbar ist, ohne daß Reservoir und Füllstands-Meßeinrichtung einander im Wege wären.

Diese Aufgabe wird mit den im Kennzeichen des Anspruches 1 angegebenen Mitteln gelöst.

Die Tatsache, daß die Meßeinrichtung von der Fördereinheit getrennt ist, erlaubt es, beide Teile, also Fördereinheit und Meßeinrichtung einschließlich der Halterung der letzteren nacheinander und somit unabhängig voneinander in den Tank einzuführen und nacheinander in ihre jeweilige Betriebsposition zu bringen. Dabei unterliegen Ausgestaltung und Positionierung und auch die von der Meßeinrichtung in Abhängigkeit von der Veränderung des Füllstandes gegebenenfalls auszuführenden Bewegungen weniger Einschränkungen als dies bei Anbringung der Meßeinrichtung an der Fördereinheit der Fall ist.

Als besonders vorteilhaft hat sich eine Ausgestaltung herausgestellt, bei welcher die Halterung für die Meßeinrichtung als Ring ausgebildet ist, der am Rand der verschließbaren Öffnung in der Tankwandung angebracht ist. Dabei besteht die Möglichkeit, die Meßeinrichtung quer zur Längsachse der Öffnung in einem Abstand vom Umfang der Öffnung anzubringen. Dazu ist es lediglich erforderlich, daß der Halterungsring für die Meßeinrichtung mit wenigstens einem z. B. im wesentlichen senkrecht zur Längsachse der Öffnung verlaufenden Halterungsarm od. dergl. versehen ist, welcher in einem Abstand vom Halterungsring die Meßeinrichtung trägt. Dies ergibt die Möglichkeit, die Meßeinrichtung so weit von der Öffnung und somit von der durch die Öffnung in den Tank eingeführten Fördereinheit zu positionieren, daß das Reservoir innerhalb des Tankes zur Erzielung eines größeren Volumens expandiert werden kann, ohne daß die Meßeinrichtung im Wege wäre.

In der Zeichnung ist ein Ausführungsbeispiel der Erfindung dargestellt. Es zeigen:
- Fig. 1: einen Längsschnitt durch einen Kraftstofftank mit darin angeordnetem Füllstandsanzeiger und der Fördereinheit in einer Position vor dem Anbringen innerhalb des Tankes,
- Fig. 2: eine der Fig. 1 entsprechende Darstellung mit der Fördereinheit in ihrer Betriebsposition.

Der in ein Kraftfahrzeug einzubauende Kraftstofftank 10, der einstückig im Extrusionsblasverfahren aus Kunststoff, aber auch auf andere Weise hergestellt werden kann, ist in seiner oberen Wandung 12 mit einer Öffnung 14 versehen, die durch Herausschneiden eines entsprechenden Teiles der Wandung hergestellt, aber auch angeformt sein kann. Bei dem in der Zeichnung dargestellten Ausführungsbeispiel ist am Tank ein kurzer Stutzen 16 angebracht, der auch zugleich der Versteifung der Tankwandung dient. Durch diese Öffnung, die im allgemeinen, wenn auch nicht notwendigerweise, einen kreisförmigen Querschnitt aufweist, wird eine vorbereitete Fördereinheit 18 in den Tank 10 eingesetzt, die ein Reservoir 28 für den Kraftstoff aufweist und im wesentlichen die Funktion hat, eine störungsfreie Versorgung des Motors des Kraftfahrzeuges mit Kraftstoff sicherzustellen.

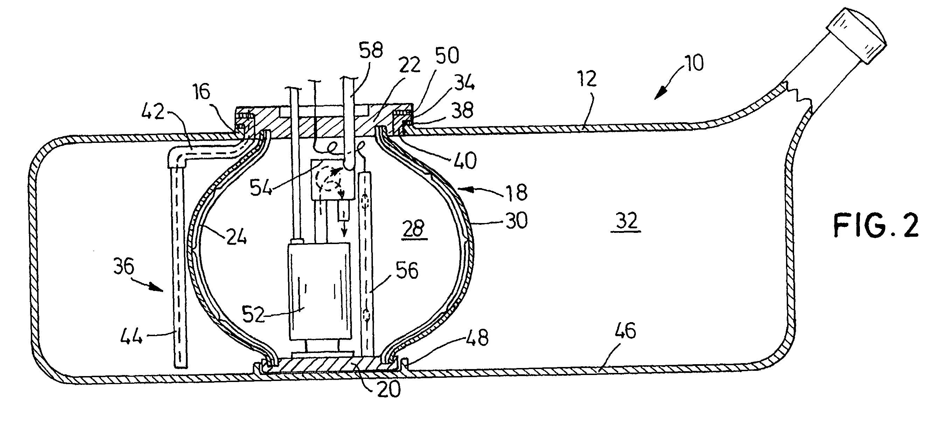

Die Fördereinheit 18 ist mit einem Bodenteil 20 und einem Kopfteil 22 versehen, die das Reservoir 28 jeweils stirnseitig begrenzen. Beide Teile 20 und 22 sind durch ein Stützgerüst 24 miteinander verbunden und gehalten, welches aus vier oder mehr Leisten 26 aus festem, elastisch verformbarem Material, also beispielsweise Federstahl oder Kunststoff besteht. Diese Leisten 26 sind über den Umfang der Fördereinheit 18 bzw. des im Querschnitt etwa kreisförmigen Reservoirs 28 jeweils um 90° gegeneinander versetzt angeordnet. Außenseitig ist das Stützgerüst 24 von einem schlauchförmigen Abschnitt 30 aus vorzugsweise verformbarem Material, beispielsweise Gummi oder Kunststoff umgeben. Dieser Abschnitt 30 bildet zwischen Bodenteil 20 und Kopfteil 22 die verformbare Begrenzungswandung des Reservoirs 28, aus welchem der Kraftstoff entnommen wird, der dem Motor zugeführt wird. Der Abschnitt 30 ist sowohl mit dem Bodenteil 20 als auch mit dem Kopfteil 22 dicht verbunden, so daß das Reservoir in seiner Betriebsposition innerhalb des Tanks (Fig. 2), abgesehen von den erforderlichen Zu- und Ableitungen für den Kraftstoff, gegenüber dem das Reservoir umgebenden Hauptraum 32 im Tank 10 abgeschlossen ist.

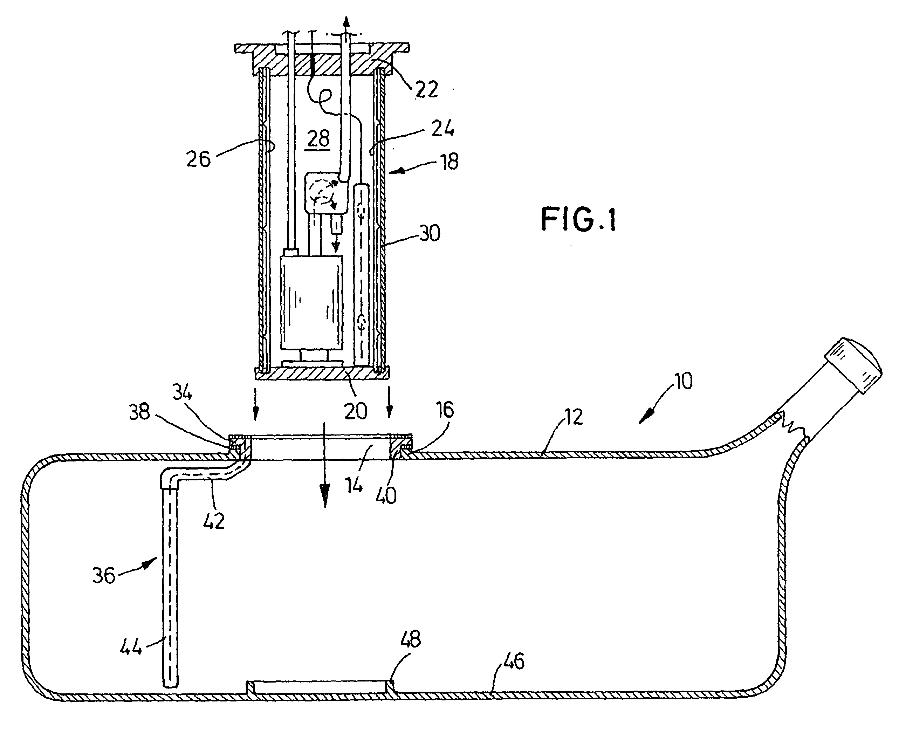

Die Anbringung der Fördereinheit 18 mit Reservoir 28 im Tank 10 erfolgt in der Weise, daß die Fördererinheit 18 z. B. ausgehend von der in Fig. 1 dargestellten Position als Einheit durch die Öffnung 14 in der oberen Wandung des Tankes 10 in letzteren eingeführt wird, wobei der Querschnitt der Fördereinheit 18 zunächst dem inneren Querschnitt eines Halterings 34 entspricht, der auf den Stutzen 16 aufgesetzt ist und zur Halterung einer Füllstands-Meßeinrichtung 36 dient, die in dem das Reservoir 28 umgebenden Raum 32 angeordnet ist und zur Messung des Füllstandes des Kraftstoffes in diesem Raum dient. Fig. 1 zeigt, daß zunächst die Meßeinrichtung 36 in den Tank eingeführt wird derart, daß in der Betriebslage der Meßeinrichtung 36 der Haltering 34 unter Zwischenschaltung eines Dichtringes 38 auf dem Stutzen 16 des Tankes 10 aufliegt, wobei ein axialer Fortsatz 40 in den Stutzen 16 eingreift. Der Haltering 34 hat somit im Querschnitt zwei Schenkel, die etwa rechteckig zueinander verlaufen. Dabei kann der Fortsatz oder Schenkel 40 in eine am Stutzen 16 innenseitig angebrachte umlaufende Ausnehmung, die mit einem entsprechenden Querschnitt versehen ist, eingreifen.

Am Haltering 34 ist ein etwa radial zur Längsachse der Öffnung 14 verlaufender Arm 42 angebracht, der an seinem freien Ende die Meßeinrichtung 36 trägt, die in üblicher Weise, z. B. als Hebelgeber, ausgebildet sein kann. So ist es möglich, die Meßeinrichtung 36 schwenkbar am Halterungsarm 42 anzubringen, wenn die Meßeinrichtung mit einem in der Zeichnung nicht dargestellten Schwimmer versehen ist, der auf dem Kraftstoff schwimmt, wobei die Winkellage des den Schwimmer tragenden Hebels 44 den Füllstand angibt. Es können aber auch alle anderen möglichen Füllstands-Meßeinrichtungen verwendet werden.

Nach dem Einsetzen der Füllstands-Meßeinrichtung 36 im Tank und dem Anbringen des Halteringes 34 am Stutzen 16 wird die im Querschnitt verkleinerte Fördereinheit 18 durch den Haltering 34 hindurch in den Tank 10 eingeführt und mit ihrem Bodenteil 20 auf den Boden 46 des Tanks 10 aufgesetzt, der zur Bildung eines Formschlusses zwischen Fördereinheit 18 und Bodenwand 46 mit einem Sitz 48 versehen ist. Beim Auftreffen des Bodenteils 20 auf der Bodenwandung 46 des Tanks 10 ragt die Fördereinheit noch um ein bestimmtes Maß durch die Öffnung 14 nach oben über den Tank hinaus, da die axiale Erstreckung der Fördereinheit 18 in ihrem in Fig. 1 dargestellten Ausgangszustand größer ist als der Abstand zwischen den beiden einander gegenüberliegenden Wandungen 12 und 46 des Tanks 10. Der Abstand zwischen Bodenteil 20 und Kopfteil 22 wird durch Abwärtsbewegen des Kopfteiles 22 verkürzt, bis dieses die in Fig. 2 dargestellte Position einnimmt, in welcher es unter Zwischenschaltung eines Dichtringes 50 auf der Stirnfläche des Halteringes 34 für die Meßeinrichtung 36 aufliegt, worauf es in geeigneter Weise, beispielsweise mittels einer Überwurfmutter, eines Bajonettverschlusses oder dgl. am Tank 10 bzw. am Stutzen 16 desselben befestigt wird. Die vorerwähnte Verkürzung des Abstandes zwischen Bodenteil 20 und Kopfteil 21 bewirkt gleichzeitig eine Verformung des Reservoirs 28, bei welcher die Leisten 26 des Stützgerüstes nach außen gebogen werden und der die Wandung des Reservoirs 28 bildende schlauchförmige Abschnitt 30 unter Verkürzung seiner axialen Erstreckung entsprechend aufgeweitet wird. In diesem aufgeweiteten Zustand, der den endgültigen Betriebszustand der Fördereinheit 18 darstellt, ist das Volumen des Reservoirs 28, das sich vom Boden des Tanks bis zu dessen oberer Wandung 12 erstreckt, merklich größer als in unverformtem Zustand der Fördereinheit 18, der in Fig. 1 dargestellt ist. In der Betriebsposition bildet das Kopfteil 22 der Fördereinheit 18 zugleich den Verschluß für die Öffnung 14.

Die innerhalb des Reservoirs 28 angeordneten Teile, also insbesondere elektrische Kraftstoffpumpe 52, Druckregler 54 und Füllstand-Meßeinrichtung 56 stehen in keinem unmittelbaren Zusammenhang mit der Erfindung, so daß sie nicht im Detail erläutert zu werden brauchen. Selbstverständlich ist die Fördereinheit 18 so ausgebildet, daß der Kraftstoff aus dem umgebenden Raum 32 in das Reservoir 28 einströmen kann. Die Versorgung des Motors des Kraftfahrzeuges mit Kraftstoff erfolgt über die Leitung 58, die auch wie die anderen - elektrischen - Leitungen flüssigkeitsdicht durch das Kopfteil 22 hindurchgeführt ist.

Die Trennung der sich außerhalb des Reservoirs 28 befindlichen Füllstands-Meßeinrichtung 36 von der Fördereinheit 18 hat den Vorteil, daß das Volumen des Reservoirs 28 durch die Anbringung der Füllstands-Meßeinrichtung 36 nicht wesentlich verringert wird. Zwar kann unter Umständen in Abhängigkeit von der Ausgestaltung der zusammenwirkenden Teile durch den Haltering 34 eine Verkleinerung der in der Wandung 12 des Tanks befindlichen Öffnung 14 verursacht werden, so daß demzufolge auch der Querschnitt der Fördereinheit 18 in ihrem Ausgangszustand, der in Fig. 1 dargestellt ist, entsprechend bemessen sein muß. Jedoch ist eine dadurch verursachte Verringerung des Volumens des Reservoirs 26 vernachlässigbar im Vergleich zu den bekannten Ausführungsformen, bei denen die außerhalb des Reservoirs befindliche Füllstands-Meßeinrichtung an der Fördereinheit 18 angebracht ist mit der Folge, daß die Kontur der Fördereinrichtung entsprechend anzupassen ist. Darüberhinaus gibt die Erfindung die Möglichkeit, die Halterung, insbesondere den Halterungsarm 42, so auszuführen bzw. zu bemessen, daß die Füllstands-Meßeinrichtung 36 sich nicht nur außerhalb der Kontur der Fördereinrichtung 18, sondern auch unabhängig von dieser in einem Abstand von der Fördereinrichtung befindet, so daß, wie im Falle des in der Zeichnung dargestellten Ausführungsbeispiel, die Fördereinheit 18 nach dem Einbringen in den Tank eine Aufweitung erfahren kann, ohne daß es notwendig wäre, auf das Vorhandensein der Meßeinrichtung 36 Rücksicht zu nehmen. Die Anwendung der Lehre gemäß der Erfindung erlaubt somit bezüglich der Anordnung und der ausgestaltung von Fördereinheit und Meßeinrichtung ein größeres Maß an Freiheit, wobei ein besonderer Vorteil darin besteht, daß die vorgenannten Vorteile erreicht werden, ohne daß eine Komplizierung der Anordnung in Kauf genommen werden müßte. Vielmehr führt die Anwendung der erfindungsgemäßen Lehre zu einer übersichtlichen Anordnung und Handhabung bei der Montage, wobei die Einzelteile, also insbesondere Fördereinheit 18 einschließlich Reservoir 28 und Meßeinrichtung 36 jeweils für sich einfacher und übersichtlicher gestaltet sein können als bei einer Kombination dieser Teile derart, daß die Meßeinrichtung an der Fördereinheit angebracht wäre.

Fördereinheit 18 und/oder Halterungsring 34 können mit Indexierungsmitteln, beispielsweise Vorsprüngen, Ausnehmungen oder dgl. versehen sein, die miteinander und/oder mit entsprechenden Ausnehmungen bzw. Vorsprüngen am Stutzen 16 des Tanks 10 zusammenwirken, um eine bestimmte relative Lage der Teile zueinander in Umfangsrichtung des Stutzens festzulegen.

## Patentansprüche

1. Kraftstofftank mit einer innerhalb des Tanks angeordneten Fördereinheit (18), die ein Reservoir (28) aufweist und durch eine in der Wandung (12) des Tanks angeordnete verschließbare Öffnung (14) in den Tank einführbar ist, und mit einer außerhalb des Reservoirs (28) im Tank (10) angeordneten Meßeinrichtung (36) zur Messung des Füllstandes, die ebenfalls durch die verschließbare in der Wandung (12) des Tanks angebrachte Öffnung (14) in den Tank einführbar und durch eine Halterung (34) in ihrer Betriebsposition gehalten ist, **dadurch gekennzeichnet, daß** die Füllstands-Meßeinrichtung (36) getrennt von der Fördereinheit (18) in den Tank (10) einführbar ist und mittels einer an der verschließbaren Öffnung (14) angebrachten Halterung (34) in ihrer Betriebslage gehalten ist.

2. Kraftstofftank nach Anspruch 1, **dadurch gekennzeichnet, daß** die Füllstands-Meßeinrichtung (36) bewegbar, vorzugsweise schwenkbar an der Halterung (34) angebracht ist.

3. Kraftstofftank nach Anspruch 1, **dadurch gekennzeichnet, daß** die Halterung (34) als Ring ausgebildet ist, der am Rand der verschließbaren Öffnung (14) in der Tankwandung (12) angebracht ist.

4. Krafstofftank nach Anspruch 1, **dadurch gekennzeichnet, daß** die Füllstands-Meßeinrichtung (36) quer zur Längsachse der Öffnung (14) in einem Abstand vom Umfang der Öffnung (14) angebracht ist.

5. Kraftstofftank nach Anspruch 4, **dadurch gekennzeichnet, daß** der Haltering (34) für die Füllstands-Meßeinrichtung (36) mit wenigstens einem z. B. im wesentlichen senkrecht zur Längsachse der Öffnung (14) verlaufenden Halterungsarm (42) versehen ist, welcher in einem Abstand vom Haltering (34) die Füllstands-Meßeinrichtung (36) trägt.

6. Kraftstofftank nach Anspruch 1, **dadurch gekennzeichnet, daß** die Fördereinrichtung (18) mit Reservoir (28) durch den an der Öffnung (14) in der Tankwandung angeordneten Haltering (34) für die Füllstands-Meßeinrichtung (36) in den Kraftstofftank (10) eingeführt wird.

7. Kraftstofftank nach Anspruch 1, **dadurch gekennzeichnet, daß** die Fördereinheit (18) mit einem stirnseitigen Verschlußteil (22) versehen ist, welches in der Betriebslage der Teile vom Haltering (34) für die Füllstands-Meßeinrichtung (36) getragen ist und auch als Verschlußteil für die Öffnung (14) in der Tankwandung (12) dient.

## Claims

1. A fuel tank comprising a delivery unit (18) which is arranged within the tank and which has a reservoir (28) and which can be introduced into the tank through a closable opening (14) in the tank wall (12), and a measuring device (36) for measuring the filling level which is arranged outside the reservoir (28) in the tank (10) and which can also be introduced into the tank through the closable opening (14) in the tank wall (12) and held by a holding means (34) in the operative position thereof, **characterised in that** the filling level measuring device (36) can be introduced into the tank (10) separately from the delivery unit (18) and is held in its operative position by a holding means (34) mounted to the closable opening (14).

2. A fuel tank according to claim 1 **characterised in that** the filling level measuring device (36) is mounted movably, preferably pivotably to the holding means (34).

3. A fuel tank according to claim 1 **characterised in that** the holding means (34) is in the form of a ring mounted to the edge of the closable opening (14) in the tank wall (12).

4. A fuel tank according to claim 1 **characterised in that** the filling level measuring device (36) is mounted at a spacing from the periphery of the opening (14) in transverse relationship to the longitudinal axis of the opening (14).

5. A fuel tank according to claim 4 **characterised in that** the holding ring (34) for the filling level measuring device (36) includes at least one holding arm (42) which for example extends substantially perpendicularly to the longitudinal axis of the opening (14) and which carries the filling level measuring device (36) at a spacing from the holding ring (34).

6. A fuel tank according to claim 1 **characterised in that** the delivery unit (18) with reservoir (28) is introduced into the fuel tank (10) through the holding ring (34) for the filling level measuring device (36) which is disposed at the opening (14) in the tank wall.

7. A fuel tank according to claim 1 **characterised in that** the delivery unit (18) is provided with an end closure portion (22) which in the operative position of the components is supported by the holding ring (34) for the filling level measuring device (36) and also serves as a closure portion for the opening (14) in the tank wall (12).

## Revendications

1. Réservoir de carburant comprenant une unité manométrique (18) disposée à l'intérieur du réservoir, qui présente une cavité (28) et qui peut être introduite dans le réservoir à travers un orifice (14) pouvant être fermé et disposé dans la paroi (12) du réservoir, et comprenant un dispositif de mesure (36), disposé à l'extérieur de la cavité (28) dans le réservoir (10), destiné à mesurer le niveau, lequel dispositif peut également être introduit dans le réservoir à travers l'orifice (14) pouvant être fermé et aménagé dans la paroi (12) du réservoir, et est maintenu dans sa position de fonctionnement par une fixation (34), **caractérisé en ce que** le dispositif de mesure du niveau (36) peut être introduit dans le réservoir (10) séparément de l'unité manométrique (18) et est maintenu dans sa position de fonctionnement au moyen d'un support (34) aménagé sur l'orifice (14) pouvant être fermé.

2. Réservoir de carburant selon la revendication 1, **caractérisé en ce que** le dispositif de mesure du niveau (36) est aménagé sur le support (34) de manière mobile, de préférence de manière pivotante.

3. Réservoir de carburant selon la revendication 1, **caractérisé en ce que** la fixation (34) est conçue comme une bague, qui est aménagée dans la paroi (12) du réservoir sur le bord de l'orifice (14) pouvant être fermé.

4. Réservoir de carburant selon la revendication 1, **caractérisé en ce que** le dispositif de mesure du niveau (36) est aménagé transversalement à l'axe longitudinal de l'orifice (14) à distance de la périphérie de l'orifice (14).

5. Réservoir de carburant selon la revendication 4, **caractérisé en ce que** la bague de support (34) pour le dispositif de mesure du niveau (36) est munie d'au moins un bras de fixation (42) s'étendant sensiblement perpendiculairement à l'axe longitudinal de l'orifice (14), lequel supporte le dispositif de mesure du niveau (36) à distance de la bague de support (34).

6. Réservoir de carburant selon la revendication 1, **caractérisé en ce que** le dispositif manométrique (18) comprenant la cavité (28) est introduit dans le réservoir de carburant (10) à travers la bague de support (34) pour le dispositif de mesure du niveau (36) disposée dans la paroi de réservoir sur l'orifice (14).

7. Réservoir de carburant selon la revendication 1, **caractérisé en ce que** l'unité manométrique (18) est munie d'une pièce de fermeture (22) côté frontal, laquelle est supportée dans la position de fonctionnement des pièces par la bague de support (34) pour le dispositif de mesure du niveau (36), et sert également de pièce de fermeture pour l'orifice (14) dans la paroi (12) du réservoir.
